# EUROPÄISCHE PATENTSCHRIFT

(11) **EP 2 171 297 B1**
(45) Veröffentlichungstag und Bekanntmachung des Hinweises auf die Patenterteilung: **26.10.2011**
(21) Anmeldenummer: 08784376.9
(22) Anmeldetag: 23.07.2008
(51) Int. Cl.: F16C 19/56, F16C 19/18

(54) **SCHRÄGKUGELLAGER IN TANDEMANORDNUNG SOWIE LAGERANORDNUNG MIT DEM SCHRÄGKUGELLAGER**
ANGULAR-CONTACT BALL BEARING IN A TANDEM ARRANGEMENT AND BEARING ARRANGEMENT COMPRISING THIS ANGULAR-CONTACT BALL BEARING
ROULEMENT A BILLES A CONTACT OBLIQUE EN TANDEM ET MONTAGE COMPORTANT CE ROULEMENT A BILLES A CONTACT OBLIQUE

(30) Priorität: 25.07.2007 DE 102007034813
(43) Veröffentlichungstag der Anmeldung: 07.04.2010
(73) Patentinhaber: Schaeffler Technologies GmbH & Co. KG, 91074 Herzogenaurach (DE)
(72) Erfinder: DIZLEK, Timur, 97421 Schweinfurt (DE); SCHWERDTFEGER, Heiz-Dieter, 82433 Bad Kohlgrub (DE); ZYLLA, Josef, 97453 Schonungen (DE)
(86) Internationale Anmeldenummer: PCT/DE2008/001196
(87) Internationale Veröffentlichungsnummer: WO 2009/012763

(56) Entgegenhaltungen:
- EP-A- 0 769 630
- DE-A1- 19 839 481
- DE-A1-102006 031 956
- DE-U1-202004 001 454
- JP-A- 9 088 947
- US-A1- 2002 186 910

## Beschreibung

### Gebiet der Erfindung

Die Erfindung betrifft ein Schrägkugellager mit einer äußeren und mit einer inneren Kugelreihe und mit mindestens einem gemeinsamen Lagerring, der die beiden Kugelreihen führt, wobei die äußere Kugelreihe mit einer Zweipunktlagerung und die innere Kugelreihe mit einer Vierpunktlagerung in dem Schrägkugellager geführt ist.

Derartige Schrägkugellager bzw. Lageranordnungen werden üblicherweise eingesetzt, um ein Laufrad oder Ähnliches gegenüber einer Umgebungskonstruktion in axialer Richtung eng zu führen, wobei die axiale Belastung in einer Hauptbelastungsrichtung von beiden Kugelreihen aufgenommen bzw. übertragen wird und die axiale Last in der Gegenrichtung, in einer Nebenbelastungsrichtung, nur über eine Kugelreihe übertragen bzw. aufgenommen wird. Hierzu wird die axiale Last in Hauptbelastungsrichtung über die Zweipunktlagerung und die Vierpunktlagerung und die axiale Last in Nebenbelastungsrichtung nur über die Vierpunktlagerung übertragen bzw. aufgenommen.

Eine andere, übliche Alternative zur Aufnahme derartiger axialer Belastungen ist die Verwendung einer Lageranordnung, welche ein Vierpunktwälzlager und ein separates Außenbord-Radialwälzlager umfasst. Bei dieser Lageranordnung werden die radialen Lasten in Hauptbelastungsrichtung von dem Außenbord-Radialwälzlager und dem Vierpunktwälzlager aufgenommen. In Nebenbelastungsrichtung wird die Last dagegen nur von dem Vierpunktlager aufgenommen.

Ferner ist es üblich, Lageranordnungen zu verwenden, welche aus einem Schrägkugellagerpaar in X- oder O-Anordnung und einem Zylinderrollenlager bestehen. Die radialen Lasten werden hierbei von dem Zylinderrollenlager und die axialen Lasten von zwei in X- bzw. O-Anordnung angestellten Schrägkugellagern abgetragen.

Aus der Druckschrift DE 198 39 481 A1 ist ein Verteilergetriebe für ein Kraftfahrzeug bekannt, welches zur Lagerung einer Kegelritzelwelle zwei voneinander beabstandete, einseitig belastbare, zweireihige Tandem-Schrägkugellager aufweist, wobei die Tandem-Schrägkugellager zueinander in O-Anordnung angestellt sind. Bei dieser Lageranordnung wird die axiale Last in die eine Belastungsrichtung von dem einen Tandem-Schrägkugellager und in der Gegenrichtung von dem anderen Tandem-Schrägkugellager aufgenommen.

Die Druckschrift US 2002/186910 A1 zeigt eine Lageranordnung mit einem gemeinsamen Außenring und mit zwei Schrägkugellagerreihen, welche in einer O-Anordnung arrangiert sind, wobei die Schrägkugellagerreihen unterschiedliche Teilkreisdurchmesser aufweisen. Die Druckschrift DE 20 2004 001454 U1 betrifft eine Lageranordnung in ähnlicher Bauweise.

In den Druckschriften EP 0769630 und JP 9088947 werden Lageranordnungen mit zwei Kugelreihen offenbart, wobei eine erste Kugelreihe als Vierpunktkugelreihe und eine zweite Kugelreihe als eine Zweipunktkugelreihe ausgebildet ist. Die Größe der Kugeln und deren Teilkreisdurchmesser ist bei beiden Kugelreihen gleich.

Aus einem Produktkatalog der Firma INA ist ein zweireihiges Schrägkugellager in Tandemanordnung bekannt, welches wohl den nächst kommenden Stand der Technik bildet. In der Baureihe TDR zeigt das zweireihige Schrägkugellager einen gemeinsamen Außenring und einen in axialer Erstreckung geteilten Innenring, wobei eine äußere Kugelreihe über eine Zweipunktlagerung und eine innere Kugelreihe über eine Vierpunktlagerung geführt ist, so dass das zweireihige Schrägkugellager in beide Richtungen axial belastbar ist.

Der Erfindung liegt die Aufgabe zugrunde, ein Schrägkugellager in Tandemanordnung bzw. eine entsprechende Lageranordnung weiter zu bilden.

Diese Aufgabe wird durch ein Schrägkugellager mit den Merkmalen des Anspruchs 1 sowie mit einer Lageranordnung mit den Merkmalen des Anspruchs 9 gelöst. Bevorzugte oder vorteilhafte Ausführungsformen der Erfindung ergeben sich aus den Unteransprüchen, der nachfolgenden Beschreibung und/oder den beigefügten Zeichnungen.

Das erfindungsgemäße Schrägkugellager weist eine äußere und eine innere Kugelreihe auf, welche jeweils ring- und/oder kreisförmig ausgebildet sind und welche in axialer Projektion und/oder in axialer Erstreckungsrichtung zueinander versetzt, insbesondere in radialer Draufsicht überlappungsfrei angeordnet sind. Die beiden Kugelreihen sind insbesondere zueinander berührungsfrei und/oder koaxial positioniert. In radialer Erstreckung ist der Außendurchmesser der äußeren Kugelreihe größer als der Außendurchmesser der inneren Kugelreihe ausgebildet. Diese Anordnung entspricht vorzugsweise einer Tandemanordnung.

Das Schrägkugellager weist mindestens einen gemeinsamen Lagerring auf, der die beiden Kugelreihen führt, wobei der gemeinsame Lagerring einstückig, axial ungeteilt und/oder einteilig ausgebildet ist. Der Lagerring zeigt somit für jede Kugelreihe eine Laufbahn, auf der die Kugeln der Kugelreihen abrollen bzw. abwälzen.

Die äußere Kugelreihe ist über eine Zweipunktlagerung in dem Schrägkugellager geführt, vorzugsweise derart, dass für die einzelne Kugel der äußeren Kugelreihe nur eine einzige Drucklinie gebildet ist. Insbesondere ist die äußere Kugelreihe mit der Zweipunktlagerung nur in eine axiale Hauptbelastungsrichtung, welche parallel zur Lagerachse ausgerichtet ist, belastbar. Die innere Kugelreihe ist dagegen in dem Schrägkugellager über eine Vierpunktlagerung gelagert, so dass für die einzelne Kugel der inneren Kugelreihe zwei in O-Anordnung ausgerichtete Drucklinien gebildet sind. Insbesondere ist die innere Kugelreihe mit der Vierpunktlagerung sowohl in der Hauptbelastungsrichtung als auch in einer Nebenbelastungsrichtung, welche ebenfalls parallel zur Lagerachse ausgerichtet ist, jedoch in Gegenrichtung zu der Hauptbelastungsrichtung zeigt, belastbar. Bevorzugt sind die Drucklinien der inneren Kugelreihe symmetrisch zu einer Radialebene ausgebildet, welche senkrecht zur Lagerachse angeordnet ist und durch die Mittelpunkte der Kugeln der inneren Kugelreihe führt. Ferner ist es bevorzugt, dass die gleichsinnigen Drucklinien der inneren und der äußeren Kugelreihe parallel angeordnet sind.

Erfindungsgemäß ist vorgesehen, dass die Kugeln der äußeren Kugelreihe einen größeren Kugeldurchmesser aufweisen als die Kugeln der inneren Kugelreihe.

Eine Überlegung der Erfindung basiert auf der Erkenntnis, dass - zum Beispiel bei dem Schrägkugellager gemäß dem nächstkommenden Stand der Technik - die Kugeldurchmesser üblicherweise so gewählt sind, dass sich die axiale Belastung in Hauptbelastungsrichtung in ähnlicher Weise auf die innere und die äußere Kugelreihe verteilt. Hierzu sind die Kugeln der inneren Kugelreihe größer ausgebildet als die Kugeldurchmesser der äußeren Kugelreihe. Demgegenüber schlägt die Erfindung vor, das Durchmesserverhältnis der Kugeln der beiden Kugelreihen so zu wählen, dass ein größerer Anteil an der axialen Last in Hauptbelastungsrichtung über die äußere Kugelreihe erfolgt und sowohl ein kleinerer Anteil in Hauptbelastungsrichtung und in Nebenbelastungsrichtung über die innere Kugelreihe aufgenommen wird. Mit dieser erfindungsgemäßen Ausgestaltung ist es möglich, dass zum Beispiel bei Anwendungen, die im Betrieb eine gerichtete Axialkraft aufweisen und die nur in speziellen Betriebszuständen, zum Beispiel mit zeitlich geringem Anteil, insbesondere beim Hoch- und Runterfahren einer Anlage, eine die axiale Betriebsdruckkraft überwiegende axiale Rückdruckkraft aufnehmen müssen, mit einem kompakten, in den axialen Abmessungen kleinen Schrägkugellager ausgekommen werden kann. Insbesondere muss kein vollwertiges und teures axiales Rückdrucklager verwendet werden. Somit wird durch die Erfindung erreicht, dass, insbesondere bei axial eng und genau zu führenden Wellen, die in geringerer Größe auftretenden Rückdruckkräfte in einem kostengünstigen, reibungs- und geräuscharmen Lager aufgenommen werden können.

Bei einer bevorzugten Ausführungsform weist die äußere Kugelreihe einen größeren Teilkreis bzw. Teilkreisdurchmesser auf als die innere Kugelreihe. Diese Ausbildung unterstreicht noch einmal die erfinderische Idee, dass die äußere Kugelreihe einen größeren Anteil der in Hauptbelastungsrichtung auftretenden axialen Lasten bzw. Druckkräfte aufnehmen soll.

Bei einer bevorzugten konstruktiven Realisierung ist der gemeinsame Lagerring als ein Außenring ausgebildet, wobei der Außenring zwei koaxial zueinander angeordnete Laufbahnen für die innere und die äußere Kugelreihe aufweist.

Zur radialinneren Abstützung der Kugelreihen zeigt das Schrägkugellager bevorzugt eine Innenringanordnung, welche einen Innenlaufring und einen Rückhaltering aufweist. Damit ist die Innenringanordnung als eine in axialer Richtung geteilter Innenring ausgebildet, welcher eine einfache Montage des Schrägkugellagers erlaubt. Vorzugsweise sind Innenlaufring und Rückhaltering im eingebauten Zustand in axialer Richtung fest zueinander verspannt, sodass das Schrägkugellager auch als Festlager einsetzbar ist. Das Axialspiel zwischen dem Rückhaltering und dem Innenlaufring ist gering ausgebildet, beispielsweise kleiner als 50 µm, vorzugsweise kleiner als 30 µm, insbesondere kleiner als 10 µm.

Bei der Aufteilung der Innenringanordnung in die beiden Innenringteile ist es bevorzugt, dass der Innenlaufring jeweils eine Laufbahn für die äußere und eine Laufbahn für die innere Kugelreihe und/oder der Rückhaltering eine Laufbahn für die innere Kugelreihe aufweist.

Bevorzugt sind die Laufbahnen der Innenringanordnung so ausgerichtet, dass die beiden Laufbahnen des Innenlaufrings zueinander gleichsinnig ausgerichtet sind, sodass sich vorzugsweise jeweils zueinander parallele Drucklinien ergeben und, dass die Laufbahn des Rückhalterings dazu gegensinnig ausgerichtet ist. Insbesondere bildet eine der beiden Laufbahnen des Innenlaufrings und die Laufbahn des Rückhalterings im zusammengebauten Zustand eine innere Laufrille. Der als Außenring ausgebildete Lagerring zeigt für die innere Kugelreihe eine äußere Laufrille, so dass über die innere und die äußere Laufrille die Vierpunktlagerung der Kugeln der inneren Kugelreihe sichergestellt ist.

Bei bevorzugten Realisierungen der Erfindung wird als Ringmaterial für den Lagerring und/oder die Innenringanordnung einer der nachfolgenden Materialien gewählt: 100Cr6 (1.3505), 100CrMn6 (1.3520), 100CrMnSi6-4 (1.3520A), C56E2 (1.1219L, 1.1219M), insbesondere in Top-Qualität verwendet. Optional sind die Oberflächen verschleißgeschützt, zum Beispiel durch karbonitrierte Oberflächen, insbesondere mit einer Eindringtiefe von ca. 0,1 mm, welche vorzugsweise bei durchhärtenden Wälzlagerstählen (martensitisch gehärtet, zum Beispiel 100Cr6 oder 100CrMn6) Verwendung finden. Die Oberflächenrauhigkeit der Laufbahnen beträgt vorzugsweise Ra <0,1 µm.

Optional weist das Schrägkugellager für eine Kugelreihe oder für jede Kugelreihe einen Käfig auf, welcher vorzugsweise als Kunststoffkäfig, insbesondere aus einem glasfaserverstärkten Kunststoff, Polyamid PA66, oder als gespritzter oder gefräster Käfig aus Peak- oder PPS-Kunststoff ausgebildet ist. Bei einer bevorzugten Weiterbildung der Erfindung weist das Schrägkugellager einen oder mehrere Schmierstoffzuführungskanäle auf, dessen bzw. deren Auslassöffnungen in axialer Richtung zwischen den beiden Kugelreihen angeordnet ist. Vorzugsweise ist der oder die Schmierstoffzuführungskanäle radial ausgerichtet, sodass sich dieser bzw. diese sternförmig ausgehend von der Lagerachse erstreckt bzw. erstrecken. Die Einlassöffnung bzw. -öffnungen ist bzw. sind vorzugsweise in einer umlaufenden Schmierstoffnut angeordnet, welche den Außenring des Schrägkugellagers radial umläuft. Der bzw. die Schmierstoffzuführungskanäle sind vorzugsweise so ausgebildet, dass Schmierfette und/oder Schmieröle einsetzbar sind.

Ein weiterer Gegenstand der Erfindung betrifft eine Lageranordnung zur Lagerung eines Laufrads, eines Rotors oder einer Schraube, insbesondere in einem Schraubenkompressor, welche erfindungsgemäß ein Schrägkugellager nach einem der vorhergehenden Ansprüche bzw. wie es soeben beschrieben wurde aufweist. Durch die erfindungsgemäße Lageranordnung wird eine genaue Führung zwischen dem gelagerten Bauteil und einem Gehäuse oder einem Maschinenaggregat, in dem dieses Bauteil axial eng geführt werden soll, erreicht. Die im Betrieb des Maschinenaggregats üblicherweise auftretende Druckkraft wird über die beiden Kugelreihen mit unterschiedlichen Kugeldurchmessern und vorzugsweise unterschiedlichen Teilkreisen aufgenommen. Die jedoch vergleichsweise selten und mit geringem Betrag auftretenden Rückdruckkräfte werden hingegen über die Vierpunktlagerung, vorzugsweise über den Rückhaltering der Innenringanordnung aufgenommen. Besondere Vorteile der Erfindung ergeben sich dadurch, dass die Lageranordnung mit dem Schrägkugellager in der Herstellung günstiger als die Mehrzahl der bekannten Lösungen ist, da zusätzliche Abpassvorgänge bzw. Fertigungsschritte wegfallen.

Bei einer bevorzugten Weiterbildung der Lageranordnung weist diese mindestens eine zweite Schrägkugellageranordnung, insbesondere in Tandemanordnung auf, wobei die Drucklinien der Schrägkugellageranordnung gleichsinnig zu den Drucklinien der Zweipunktlagerung der äußeren Kugelreihe orientiert sind. Vorzugsweise sind die Drucklinien der zweiten Schrägkugellageranordnung parallel zu den Drucklinien der Zweipunktlagerung orientiert.

Weitere Merkmale, Vorteile und Wirkungen der Erfindung ergeben sich aus der nachfolgenden Beschreibung bevorzugter Ausführungsbeispiele sowie den beigefügten Figuren der Erfindung. Dabei zeigen:
- Fig. 1: ein Schrägkugellager in einer schematischen Längsschnittdarstellung als ein erstes Ausführungsbeispiel der Erfindung;
- Fig. 2: des Schrägkugellagers in Fig. 1 in abgewandelter Ausführungsform in gleicher Darstellung als ein zweites Ausführungsbeispiel der Erfindung;
- Fig. 3: eine Lageranordnung in einer schematischen Längsschnittdarstellung zur Lagerung einer Welle mit dem Schrägkugellager gemäß Fig. 1.

Entsprechende oder gleiche Teile sind in den Figuren jeweils mit den gleichen Bezugszeichen versehen.

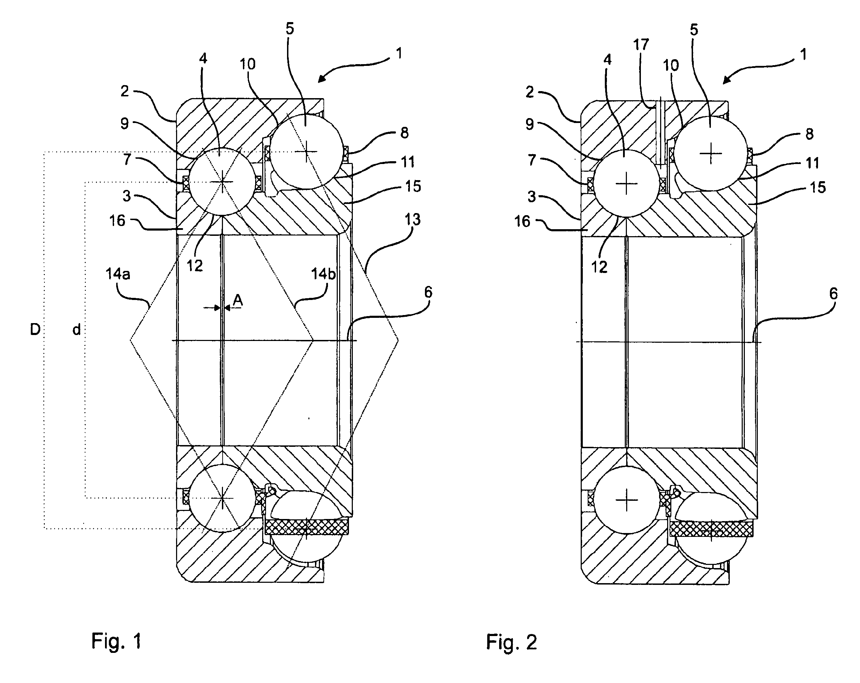

Die Fig. 1 zeigt ein Schrägkugellager 1 in einem schematischen Längsschnitt. Das Schrägkugellager 1 umfasst einen einstückigen Außenring 2 und eine Innenringanordnung 3, zwischen denen eine innere Kugelreihe 4 und eine äußere Kugelreihe 5 abrollen bzw. abwälzen. Beide Kugelreihen 4, 5 sind in einer Ringform, welche koaxial zu einer Lagerachse 6 angeordnet ist, ausgerichtet und werden in Käfigen 7 bzw. 8 geführt. Der Teilkreisdurchmesser d der inneren Kugelreihe 4 ist kleiner gewählt als der Teilkreisdurchmesser D der äußeren Kugelreihe. Der Unterschied zwischen den Teilkreisdurchmessern liegt in einem Bereich von ungefähr der Hälfte des Durchmessers der Kugeln der inneren Kugelreihe 4. Ergänzend ist der Durchmesser der Kugeln der äußeren Kugelreihe 5 größer ausgebildet als der Durchmesser der Kugeln der inneren Kugelreihe 4. Das Verhältnis der Durchmesser der Kugeln der äußeren Kugelreihe 5 und der Kugeln der inneren Kugelreihe 4 liegt im Bereich oder entspricht dem Verhältnis zwischen dem Teilkreisdurchmesser D und dem Teilkreisdurchmesser d.

Die innere Kugelreihe 4 und die äußere Kugelreihe 5 sind somit in einer Tandemanordnung positioniert, wobei diese im gezeigten Längsschnitt treppenartig zueinander versetzt angeordnet sind.

Der Außenring 2 ist einteilig oder einstückig ausgeführt und weist zur Führung der Kugeln der inneren Kugelreihe 4 eine äußere Rille 9 und zur Führung der äußeren Kugelreihe 5 eine äußere Laufbahnschulter 10 auf.

Die Innenringanordnung 3 weist als Gegenlaufbahn zu der äußeren Laufbahnschulter 10 eine innere Laufbahnschulter 11 und als Gegenlaufbahn zu der äußeren Rille 9 eine innere Rille 12 auf.

Die Laufbahnschultern 10, 11 bzw. die Rillen 9, 12 sind so ausgebildet, dass sich für die Kugeln der äußeren Kugelreihe 5 eine Zweipunktlagerung ergibt, wobei die korrespondierende Zweipunktdrucklinie 13 in Fig. 1 im Bereich der Lagerachse 6 nach rechts geneigt ist. Durch die äußere Rille 9 und die innere Rille 12 wird für die Kugeln der inneren Kugelreihe 4 eine Vierpunktlagerung bereitgestellt, sodass die Vierpunktdrucklinien 14a und 14b zueinander in O-Anordnung gestellt sind.

Nicht zuletzt aus Montagegründen ist die Innenringanordnung 3 in axialer Richtung geteilt ausgebildet und weist einen Innenlaufring 15 sowie einen Rückhaltering 16 auf, welche zueinander in axialer Richtung mit einem Axialspiel A z.B. < 10 µm verspannt sind. Der Innenlaufring 15 trägt die innere Laufbahnschulter 11 und einen ersten axialen Teilabschnitt der inneren Rille 12. Der Rückhaltering 3 trägt dagegen den zweiten Teilabschnitt der inneren Rille 12. Wie aus der Fig. 1 zu entnehmen ist, ist die innere Rille 12 durch die Schnittebene zwischen Rückhaltering 16 und Innenlaufring 15 mittig geteilt.

Die Fig. 2 zeigt das Schrägkugellager 1 in Fig. 1 in einer abgewandelten Ausführungsform, wobei im Gegensatz zu der Ausführungsform in Fig. 1 ein Schmierstoffzuführungskanal 17 vorgesehen ist, welcher sich zur Zuführung von Schmierfett oder Schmieröl im Außenring 2 in radialer Richtung von der Außenseite des Außenrings 2 bis in den Wälzkörperraum zwischen den Kugelreihen 4, 5 erstreckt. Optional kann an der Eintrittsseite des Schmierstoffzuführungskanals 17 eine Schmiernut in den Außenring eingebracht sein.

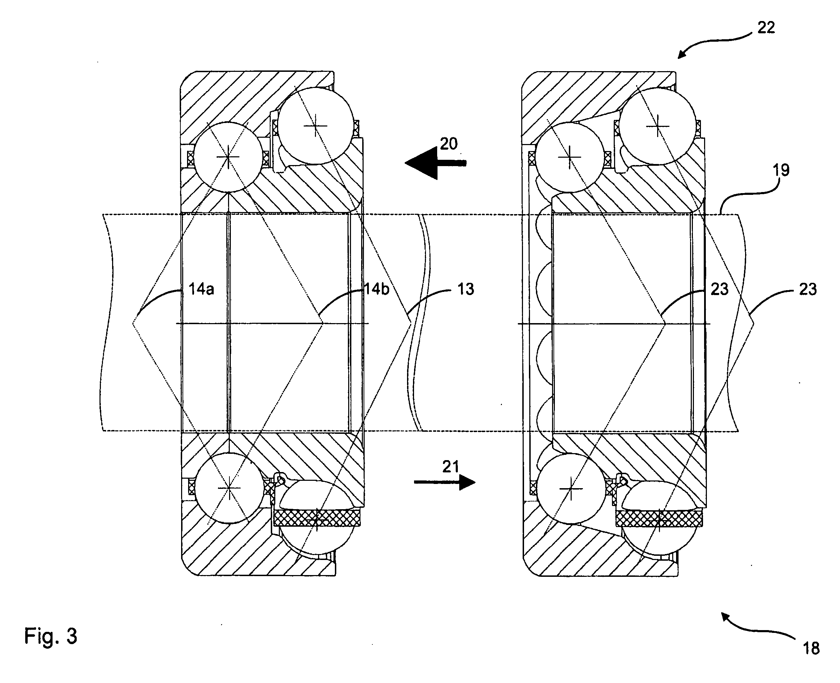

Die Fig. 3 zeigt - ebenfalls in einer schematischen Längsschnittdarstellung - eine Lageranordnung 18 zur Lagerung einer Welle 19 oder bei alternativen Ausführungsformen eines Laufrads, Rotors, Rotorwelle, Getriebewelle oder dergleichen, welche gegenüber einem nicht dargestellten Maschinenaggregat, Gehäuse oder Abstützung geführt wird. Ein mögliches Anwendungsbeispiel betrifft einen Schraubenkompressor. Die Welle 19 ist in der Mitte unterbrochen dargestellt, um zeichnerisch darauf hinzuweisen, dass u. a. in dem gebrochenen Bereich weitere Komponenten angeordnet sein können. Die Welle 19 überträgt im Betrieb Druckkräfte in eine axiale Hauptlastrichtung gemäß Pfeil 20 und Nebenlastkräfte in die Gegenrichtung gemäß Pfeil 21. Diese Lastverteilung kann beispielsweise bei Anwendungen auftreten, die im Betrieb eine gerichtete Axialkraft aufweisen und bei denen nur in speziellen Betriebszuständen, mit zeitlich geringem Anteil, beispielsweise beim Hoch- und Runterfahren einer Anlage, eine die axiale Betriebsdruckkraft überwiegende axiale Rückdruckkraft gebildet wird. Zur Aufnahme der axialen Druckkräfte weist die Lageranordnung 18 ein die betriebsbedingten Druckkräfte in Hauptlastrichtung 20 aufnehmendes Tandemlager 22 und das die auftretenden Rückdruckkräfte aufnehmendes, mit einem Vierpunktlager versehendes Schrägkugellager 1 gemäß Fig. 1 oder Fig. 2 auf. Wie sich aus der Verteilung der Drucklinien 13, 23, 14a,b in der Fig. 3 ergibt, ist die Lageranordnung 18 asymmetrisch belastbar, wobei die Lageranordnung 18 in Hauptlastrichtung 20 eine höhere axiale Last bzw. Druckkräfte aufnehmen kann als in die Gegenrichtung gemäß Pfeil 21.

Bei alternativen Ausführungsformen sind das Tandemlager 22 und das Schrägkugellager 1 anders arrangiert, so kann, beispielsweise aus konstruktiven Gründen, das Schrägkugellager 1 bzw. Tandemlager 22 gespiegelt oder zueinander vertauscht angeordnet sein.

Zusammenfassend wird durch die Lageranordnung 18 eine Möglichkeit gegeben, Rückdruckkräfte vergleichsweise geringer Größe im Betrieb durch eine kostengünstige, reibungs- und geräuscharme Lagerung aufzunehmen.

### Bezugszeichenliste

- 1: Schrägkugellager
- 2: Außenring
- 3: Innenringsanordnung
- 4: innere Kugelreihe
- 5: äußere Kugelreihe
- 6: Lagerachse
- 7: Käfig der inneren Kugelreihe
- 8: Käfig der äußeren Kugelreihe
- 9: äußere Rille
- 10: äußere Laufbahnschulter
- 11: innere Laufbahnschulter
- 12: innere Rille
- 13: Drucklinie der Zweipunktlagerung
- 14 a, b: Drucklinien der Vierpunktlagerung
- 15: Innenlaufring
- 16: Rückhaltering
- 17: Schmierstoffkanal
- 18: Lageranordnung
- 19: Welle
- 20: Pfeil in Hauptbelastungs- bzw. Hauptdruckrichtung
- 21: Pfeil in Nebenbelastungs- bzw. Gegendruckrichtung
- 22: Schrägkugellager in Tandemanordnung
- 23: Drucklinien des Schrägkugellagers 22

## Patentansprüche

1. Schrägkugellager (1) mit einer äußeren (5) und mit einer inneren (4) Kugelreihe und mit mindestens einem gemeinsamen Lagerring (2), der die beiden Kugelreihen (4,5) führt,
wobei die äußere Kugelreihe (5) mit einer Zweipunktlagerung und die innere Kugelreihe (4) mit einer Vierpunktlagerung in dem Schrägkugellager (1) geführt ist, wobei in radialer Ersteckung der Außendurchmesser der äußeren Kugelreihe (5) größer als der Außendurchmesser der inneren Kugelreihe (4) ausgebildet ist, **dadurch gekennzeichnet, dass**
die Kugeln der äußeren Kugelreihe (5) einen größeren Durchmesser aufweisen als die Kugeln der inneren Kugelreihe (4).

2. Schrägkugellager (1) nach Anspruch 1, **dadurch gekennzeichnet, dass** die äußere Kugelreihe (5) einen größeren Teilkreis (D) aufweisen als die innere Kugelreihe (4, d).

3. Schrägkugellager (1) nach Anspruch 1 oder 2, **dadurch gekennzeichnet, dass** der Lagerring als ein einstückiger Außenring (2) ausgebildet ist:

4. Schrägkugellager (1) nach einem der vorhergehenden Ansprüche, **gekennzeichnet durch** eine Innenringanordnung (3), welche einen Innenlaufring (15) und einen Rückhaltering (16) aufweist.

5. Schrägkugellager (1) nach Anspruch 4, **dadurch gekennzeichnet, dass** der Innenlaufring (15) jeweils eine Laufbahn (11, 12) für die äußere (5) und für die innere (4) Kugelreihe aufweist.

6. Schrägkugellager (1) nach Anspruch 4 oder 5, **dadurch gekennzeichnet, dass** der Rückhaltering (16) eine Laufbahn (12) für die innere Kugelreihe (4) aufweist.

7. Schrägkugellager (1) nach einem der Ansprüche 5 oder 6, **dadurch gekennzeichnet, dass** im Längsschnitt parallel oder koplanar zu der Lagerachse (6) die beiden Laufbahnen (11,12) des Innenlaufrings (15) zueinander gleichsinnig ausgerichtet sind und dass die Laufbahn (12) des Rückhalterings (16) dazu gegensinnig ausgerichtet ist.

8. Schrägkugellager (1) nach einem der vorhergehenden Ansprüche, **gekennzeichnet durch** einen Schmierstoffzuführungskanal (17), dessen Auslassöffnung axial zwischen den beiden Kugelreihen (4,5) angeordnet ist.

9. Lageranordnung (18) zur Lagerung eines Laufrades, eines Rotors oder einer Schraube, insbesondere in einem Schraubenkompressor, **gekennzeichnet durch** ein Schrägkugellager (1) nach einem der vorhergehenden Ansprüche.

10. Lageranordnung (18) nach Anspruch 9, **gekennzeichnet durch** eine zweite Schrägkugellageranordnung (22), wobei die Drucklinien (23) der zweiten Schrägkugellageranordnung (22) gleichsinnig zu den Drucklinien (13) der Zweipunktlagerung der äußeren Kugelreihe (5) orientiert sind.

## Claims

1. Angular-contact ball bearing (1) having an outer ball row (5) and an inner ball row (4) and at least one common bearing race (2), which guides the two ball rows (4, 5), the outer ball row (5) being guided in the angular-contact ball bearing (1) by a two-point bearing and the inner ball row (4) by a four-point bearing, the outside diameter of the outer ball row (5) being greater in radial extent than the outside diameter of the inner ball row (4), **characterized in that** the balls of the outer ball row (5) have a larger diameter than the balls of the inner ball row (4).

2. Angular-contact ball bearing (1) according to Claim 1, **characterized in that** the outer ball row (5) has a larger pitch circle (D) than the inner ball row (4, d).

3. Angular-contact ball bearing (1) according to Claim 1 or 2, **characterized in that** the bearing race takes the form of a one-piece outer race (2).

4. Angular-contact ball bearing (1) according to one of the preceding claims, **characterized by** an inner race arrangement (3), which comprises an inner race (15) and a retaining ring (16).

5. Angular-contact ball bearing (1) according to Claim 4, **characterized in that** the inner race (15) has one raceway (11, 12) each for the outer ball row (5) and the inner ball row (4).

6. Angular-contact ball bearing (1) according to Claim 4 or 5, **characterized in that** the retaining ring (16) has a raceway (12) for the inner ball row (4).

7. Angular-contact ball bearing (1) according to either of Claims 5 or 6, **characterized in that** in longitudinal section parallel or coplanar with the bearing axis (6) the two raceways (11, 12) of the inner race (15) are oriented in the same direction as one another and **in that** the raceway (12) of the retaining ring (16) is oriented in the opposite direction thereto.

8. Angular-contact ball bearing (1) according to one of the preceding claims, **characterized by** a lubricant feed channel (17), the outlet opening of which is arranged axially between the two ball rows (4, 5).

9. Bearing arrangement (18) for supporting a wheel, a rotor or a screw, particularly in a screw compressor, **characterized by** an angular-contact ball bearing (1) according to one of the preceding claims.

10. Bearing arrangement (18) according to Claim 9, **characterized by** a second angular-contact ball bearing arrangement (22), the axes of compression (23) of the second angular-contact ball bearing arrangement (22) being oriented in the same direction as the axes of compression (13) of the two-point bearing of the outer ball row (5).

## Revendications

1. Roulement à billes à contact oblique (1) comprenant une rangée de billes extérieure (5) et une rangée de billes intérieure (4) et comprenant au moins une bague de palier commune (2) qui guide les deux rangées de billes (4, 5),
la rangée de billes extérieure (5) étant guidée avec un support à deux points et la rangée de billes intérieure (4) étant guidée avec un support à quatre points dans le roulement à billes à contact oblique (1), le diamètre extérieur de la rangée de billes extérieure (5) étant supérieur dans l'étendue radiale au diamètre extérieur de la rangée de billes intérieure (4),
**caractérisé en ce que**
les billes de la rangée de billes extérieure (5) présentent un plus grand diamètre que les billes de la rangée de billes intérieure (4).

2. Roulement à billes à contact oblique (1) selon la revendication 1, **caractérisé en ce que** la rangée de billes extérieure (5) présente un plus grand cercle partiel (D) que la rangée de billes intérieure (4, d).

3. Roulement à billes à contact oblique (1) selon la revendication 1 ou 2, **caractérisé en ce que** la bague de palier est réalisée sous forme de bague extérieure d'une seule pièce (2).

4. Roulement à billes à contact oblique (1) selon l'une quelconque des revendications précédentes, **caractérisé par** un agencement de bague interne (3) qui présente une bague de roulement interne (15) et une bague de retenue (16).

5. Roulement à billes à contact oblique (1) selon la revendication 4, **caractérisé en ce que** la bague de roulement interne (15) présente à chaque fois un chemin de roulement (11, 12) pour la rangée de billes extérieure (5) et la rangée de billes intérieure (4).

6. Roulement à billes à contact oblique (1) selon la revendication 4 ou 5, **caractérisé en ce que** la bague de retenue (16) présente un chemin de roulement (12) pour la rangée de billes intérieure (4).

7. Roulement à billes à contact oblique (1) selon l'une quelconque des revendications 5 ou 6, **caractérisé en ce qu**'en coupe longitudinale, parallèlement ou de manière coplanaire à l'axe de roulement (6), les deux chemins de roulement (11, 12) de la bague de roulement interne (15) sont orientés dans le même sens l'un par rapport à l'autre et en ce que le chemin de roulement (12) de la bague de retenue (16) est orienté en sens inverse par rapport à ceux-ci.

8. Roulement à billes à contact oblique (1) selon l'une quelconque des revendications précédentes, **caractérisé par** un conduit d'alimentation en lubrifiant (17) dont l'ouverture de sortie est disposée axialement entre les deux rangées de billes (4, 5).

9. Agencement de roulement (18) pour le support par roulement d'une roue mobile, d'un rotor ou d'une vis, en particulier dans un compresseur à vis, **caractérisé par** un roulement à billes à contact oblique (1) selon l'une quelconque des revendications précédentes.

10. Agencement de roulement (18) selon la revendication 9, **caractérisé par** un deuxième agencement de roulement à billes à contact oblique (22), les lignes de pression (23) du deuxième agencement de roulement à billes à contact oblique (22) étant orientées dans le même sens que les lignes de pression (13) du support à deux points de la rangée de billes extérieure (5).
